# EUROPEAN PATENT SPECIFICATION

(11) **EP 3 890 054 B1**
(45) Date of publication and mention of the grant of the patent: **19.07.2023**
(21) Application number: 20167103.9
(22) Date of filing: 31.03.2020
(51) Int. Cl.: H01M 10/6554, H01M 10/42, H01M 10/613, H01M 10/653, H01M 10/6551, H01M 50/20, H01M 50/581

(54) **A BATTERY SYSTEM AND A VEHICLE INCLUDING AT LEAST ONE BATTERY SYSTEM**
BATTERIESYSTEM UND FAHRZEUG MIT MINDESTENS EINEM BATTERIESYSTEM
SYSTÈME DE BATTERIE ET VÉHICULE COMPRENANT AU MOINS UN SYSTÈME DE BATTERIE

(43) Date of publication of application: 06.10.2021
(73) Proprietor: Samsung SDI Co., Ltd., Gyeonggi-do 17084 (KR)
(72) Inventor: Reinprecht, Wolfgang, 8144 Attendorf (AT); Erhart, Michael, 8054 Seiersberg-Pirka (AT); Maxl, Florian, 8020 Graz (AT)
(74) Representative: Gulde & Partner

(56) References cited:
- EP-A2- 2 362 463
- US-A1- 2013 143 079

## Description

### Field of the Invention

The present invention relates to a battery system that allows for an improved cooling of the components of the battery disconnecting unit, BDU and the battery system as a whole and a vehicle including at least one battery system.

### Technological Background

In the recent years, vehicles for transportation of goods and people have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator. Furthermore, the vehicle may include a combination of electric motor and conventional combustion engine. In general, an electric-vehicle battery (EVB) or traction battery is a battery used to power the propulsion of battery electric vehicles (BEVs). Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g., cylindrical or rectangular, depends on the battery's intended purpose. Lithium-ion (and similar lithium polymer) batteries, widely known via their use in laptops and consumer electronics, dominate the most recent group of electric vehicles in development. Rechargeable batteries may be used as a battery module formed of a plurality of unit battery cells coupled in series and/or in parallel so as to provide a high energy density, in particular for motor driving of a hybrid vehicle. That is, the battery module is formed by interconnecting the electrode terminals of the plurality of unit battery cells depending on a required amount of power and in order to realize a high-power rechargeable battery. An example of such a battery module is disclosed in document US2013/143079.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. In automotive applications, battery systems often consist of a plurality of battery modules connected in series for providing a desired voltage. Therein, the battery modules may comprise submodules with a plurality of stacked battery cells, each stack comprising cells connected in parallel that are connected in series *(XpYs)* or multiple cells connected in series that are connected in parallel *(XsYp).*

For meeting the dynamic power demands of various electrical consumers connected to the battery system, static control of battery power output and charging is not sufficient. Thus, steady exchange of information between the battery system and the controllers of the electrical consumers is required. This information includes the battery systems actual state of charge (SoC), potential electrical performance, charging ability and internal resistance as well as actual or predicted power demands or surpluses of the consumers. Therefore, battery systems usually comprise a battery management system, BMS, for obtaining and processing such information on system level and further a plurality of cell supervision circuits, CSCs, which are part of the system's battery modules and obtain and process relevant information on system level. Particularly, the BMS usually measures the system voltage, the system current, the local temperature at different places inside the system housing, and the insulation resistance between live components and the system housing. Additionally, the CSCs usually measure individual the cell voltages and the temperatures of the battery modules.

The mechanical integration of such battery system requires appropriate mechanical connection of the individual battery system components among themselves and with structures of the electrical consumers, e.g. a vehicle. These connections must be designed to remain functional and safe during the average service life of the battery system and under the stresses provided during use of the consumers. Further, installation space, interchangeability and safety requirements must be met, especially in mobile applications. Safety requirements, including the protection of passengers of a vehicle of harmful effluents of the battery system, such as toxic gases, smoke, or the like, are usually provided by a gas tight housing enclosing the battery modules and BMS for restricting the emission of such effluents.

In case of an abnormal operation state, a battery pack shall usually be disconnected from a load connected to a terminal of the battery pack. Therefore, battery systems further comprise a battery disconnect unit, BDU, that is electrically connected between the battery module and battery system terminals. During the usage of the batteries the components of BDU get heated and release heat energy, hence, the components of the BDU need to be cooled. Usually, the BDU components are air cooled within the closed or partly opened housing inside the battery pack. This however, requires longer busbars to provide enough cooling surface for the electric components such as relay and fuses. The longer busbars require a much wider cross section of the busbars to keep the resistance and losses as low as possible. Furthermore, in order to meet the actual requirements, the OEM's ask for higher fast charge currents, which cause much more power loss and internal heating of the BDU components, particularly with long and wide busbars.

It is thus an object of the present invention to overcome or reduce at least some of the drawbacks of the prior art and to provide a battery system that allows for an improved cooling of the components of the BDU and the battery system as a whole in an efficient manner.

### Summary of Invention

The present invention is defined by the features of claim 1 and relates to a battery system.

Embodiments of the present disclosure seek to solve at least one of the problems existing in the prior art to at least some extent. In particular, a battery system is provided comprising a battery module with a plurality of battery cells interconnected between module terminals and a battery disconnecting unit, BDU, comprising an interface unit electrically connected to and selectively closing an electric path between the module terminals and battery system terminals. The battery system further comprises a housing enclosing the battery module and the BDU, wherein the housing comprises an opening. A cooling plate is detachably mounted on an outside of the housing and is configured for closing the opening of the housing. Further, a thermally conductive and electrically insulating thermal interface material layer, TIM, is disposed between and adjacent to the interface unit and the cooling plate, wherein the interface unit comprises an interface plate with a plurality of metal sub-plates in an electrically insulating material base and BDU elements.

According to another aspect of the present disclosure, a surface area of the cooling plate may be less than 20% of a total surface area of the housing.

The cooling plate may be configured to be in a thermal contact with the housing, wherein the cooling plate and/or the housing is/are configured to transfer heat to surroundings outside the battery system.

The cooling plate may comprise a plurality of primary ribs configured for transferring heat from the battery system to the surroundings outside the battery system.

The housing may comprise a plurality of secondary ribs configured for transferring heat from the battery system to the surroundings outside the battery system.

The metal sub-plates may be disposed apart from one another and selectively connected to or by the BDU elements.

The BDU elements may comprise a BDU control unit and at least one BDU relay, at least one BDU fuse and/or at least one BDU busbar.

A high-voltage connector, HVC, may be configured to reach through the opening and to be electrically connected to the interface unit and forming the battery system terminals.

The HVC may be extending from one side of the cooling plate and the BDU is mounted on the opposite side of the cooling plate facing into the housing.

The HVC, the cooling plate, the TIM and the BDU may be joined together, such that the cooling plate, the TIM and the BDU may be configured as a single BDU assembly unit.

The BDU assembly unit may be adapted to be removed from the outside of the housing.

The HVC may extend through the cooling plate and the TIM.

The housing may comprise at least one additional opening which allows opening an electric connection between the BDU and the module terminals and/or the BDU and the system while the cooling plate is mounted on the housing.

According to another aspect of the present disclosure, a vehicle including at least one battery system as defined above is provided.

The vehicle may be adapted such that the BDU assembly unit is removable from the battery system without removing the battery system from the vehicle.

Further aspects of the present invention could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a perspective view of a battery cell according to an embodiment;
- Fig. 2: illustrates a perspective view of a conventional battery module;
- Fig. 3: illustrates a top view of a battery system according to an embodiment;
- Fig. 4: illustrates a perspective view of a BDU according to an embodiment;
- Fig. 5: illustrates a perspective view of the battery system with the BDU shown in Fig. 3 according to an embodiment; and
- Fig. 6: illustrates a top view of the battery system according to an embodiment.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. As used herein, the term "and/or" includes any and all combinations of one or more of the associated listed items. Further, the use of "may" when describing embodiments of the present invention refers to "one or more embodiments of the present invention." Although the embodiments herein are described with various specific embodiments, it will be obvious for a person skilled in the art to practice the invention with modifications. All such modifications are deemed to be within the scope of the claims.

As used herein, the terms "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered around the value. In addition, the use of "may" when describing embodiments of the present invention refers to "one or more embodiments of the present invention." Herein, the terms "upper" and "lower" are defined according to the z-axis. For example, the upper cover is positioned at the upper part of the z-axis, whereas the lower cover is positioned at the lower part thereof.

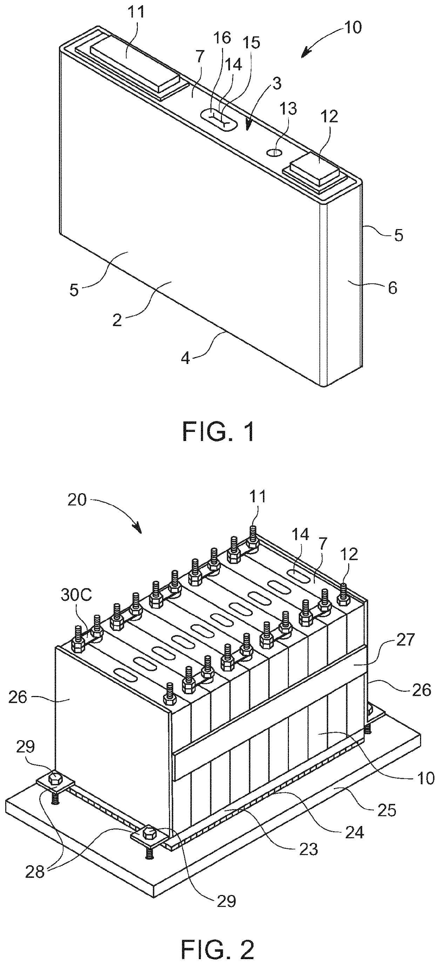

Fig. 1 is a perspective view illustrating a battery cell according to an exemplary embodiment.

As shown in Fig. 1, a battery cell 10 according to an embodiment may include an electrode assembly, and a case 2 for accommodating the electrode assembly, the case 2 containing an electrolyte. The electrolyte may comprise a lithium salt, such as LiPF6 or LiBF4, and an organic solvent, such as EC, PC, DEC, or EMC. The electrolyte solution may be in a liquid, solid, or a gel state. The battery cell 10 may also include a cap assembly 3 for sealing an opening of the case 2. The battery cell 10 will be described as a non-limiting example of a lithium ion secondary battery configured to have a prismatic shape.

The case 2 may be configured to have a substantially cuboidal shape, and an opening may be formed at one side thereof. The case 2 may be formed of a metal, such as aluminum. The case 2 may include a bottom surface 4 having a substantially rectangular shape, and may include a pair of first lateral walls 5, that are wide side surfaces, and a pair of second lateral walls 6 connected vertically to end portions of the bottom surface 4, respectively, to form a space for accommodating the electrode assembly. The first lateral walls 5 may face each other, and the second lateral walls 6 may be positioned to face each other and may be connected to the first lateral walls 5. A length of an edge at which the bottom surface 4 and one of the first lateral walls 5 are connected to each other may be longer than that of an edge at which the bottom surface 4 and one of the second lateral walls 6 are connected to each other. Preferably, each of the adjacent first lateral walls 5 and second second lateral walls 6 enclose an angle of about 90°, respectively.

The cap assembly 3 may include a cap plate 7 for covering the opening of the case 2 by being bonded to the case 2, and may include a positive terminal 11 (first terminal) and a negative terminal 12 (second terminal), which are externally protruded from the cap plate 7 to be electrically connected to the positive electrode and the negative electrode, respectively. The cap plate 7 may be configured to have a shape of a plate that may be extended in one direction, and that may be bonded to the opening of the case 2. The cap plate 7 may include an injection hole 13 and a vent hole 14 that communicate with an interior of the cap assembly 3. The injection hole 13 may be configured to allow injection of the electrolyte solution, and a sealing cap may be mounted thereon or therein. Further, a vent member 16 including a notch 15, which may be opened due to a predetermined pressure, may be mounted to or in the vent hole 14.

Referring to Fig. 2, an exemplary embodiment of a conventional battery module 20 includes a plurality of battery cells 10, e.g. as illustrated in Fig. 1, aligned in one direction and a heat exchange member 23 provided adjacent to a bottom surface of the plurality of battery cells 10. In addition, an elastic member 24 made of rubber or other elastic materials may be interposed between a support plate 25 and the heat exchange member 23. A pair of end plates 26 are provided to face wide surfaces of the battery cells 10 at the outside of the battery cells 10, and a connection plate 27 is configured to connect the pair of end plates 26 to each other thereby fixing the plurality of battery cells 10 together. Fastening portions 28 on both sides of the battery module 20 are fastened to the support plate 25 by bolts 29.

In the battery module 20, each battery cell 10 is a prismatic (or rectangular) cell, the wide flat surfaces of the cells 10 being stacked together to form the battery module 20. The positive and negative electrode terminals 11 and 12 of neighboring battery cells 10 are electrically connected through a busbar 30c, and the busbar 30c may be fixed by a nut or the like. Hence, the battery module 20 may be used as power source unit by electrically connecting the plurality of battery cells 10 as one bundle.

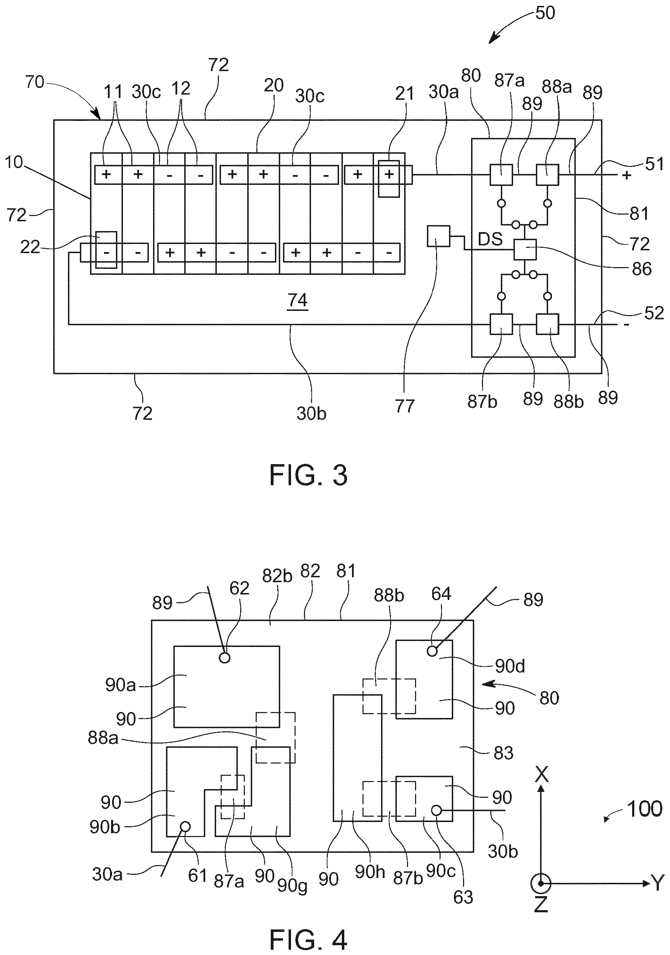

Fig. 3 is a top view illustrating a battery system 50 according to an embodiment.

It is to be noted, that the Fig. 3 is meant to provide a better understandability of the battery system 50 of the present disclosure, especially the electrical connection between a battery module 20 and a BDU (Battery Disconnect Unit) 80 of the battery system 50. The battery system 50 may be utilized in an electric vehicle and thus the battery system 50 may only have a single level.

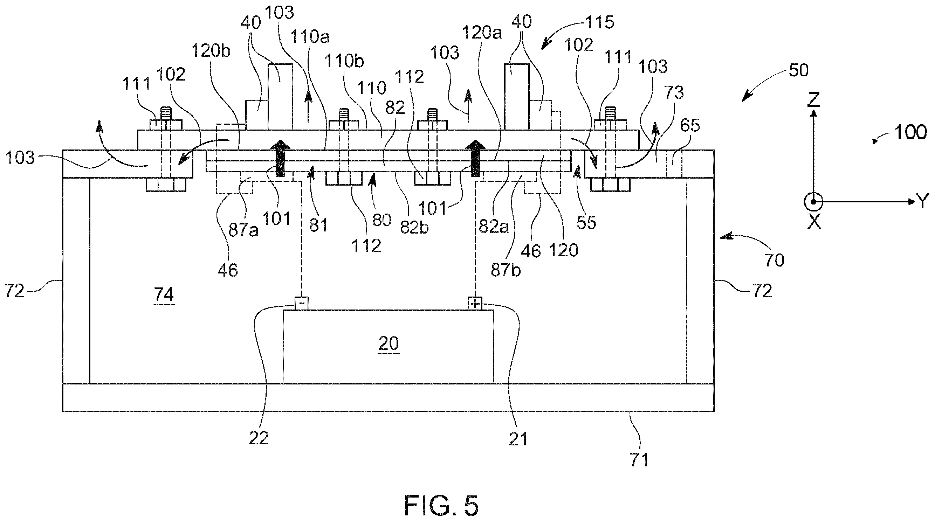

As shown in Fig. 5, the battery system 50 comprises a housing 70 with a base plate 71, four lateral walls 72 and a top cover 73. The housing 70 is closed by the top cover 73 for providing an essentially gastight housing 70 for battery system 50. The base plate 71, the four lateral walls 72 and the top cover 73 enclose a battery compartment 74. Preferably, the housing 70, i.e. base plate 71, the four lateral walls 72 and the top cover 73, is formed of aluminum, such as e.g. casted aluminum. However plastic materials may also be used. The housing 70 may be assembled from several parts, such as the base plate 71 and the lateral walls 72 forming battery compartment 74, and a top cover 73 for covering the battery compartment 74. The housing 70 may further comprise sealing elements for providing controlled gas tightness to the environment.

The battery system 50 comprises a battery module 20. As shown in Fig. 3, the battery module 20 comprises ten aligned battery cells 10 that are stacked in a stacking direction with their wide side surfaces facing each other. The stacking direction of the battery module 20 is also the longitudinal direction of the battery module 20 along which the battery module 20 has its largest extension. The battery module 20 is positioned in the battery compartment 74 with its longitudinal direction being essentially parallel to Y-axis of a co-ordinate axis 100.

The battery cells 10 of the battery module 20 are connected to each other via busbars 30c in a 2p5s configuration. Therefore, each busbar 30c connects two first cell terminals 11 and two second cell terminals 12, i.e. a total of four cell terminals 11, 12 to each other. The plurality of battery cells 20 are interconnected by means of the respective busbars 30c between module terminals 21 and 22, namely a first module terminal 21 and a second module terminal 22.

The battery system 50 further comprises a BDU (Battery Disconnect Unit) 80 comprising an interface unit 81. In Fig. 4, a top view of the BDU 80 comprising the interface unit 81 is depicted. The interface unit 81 comprises an interface plate 82 with a plurality of metal sub-plates 90 disposed, or embedded, in an electrically insulating material base 83. The metal sub-plates 90 are disposed in the electrically insulating material base 83, such that the metals sub-plates are exposed on both sides of the interface plate 82. The metal sub-plates 90 comprise a thermally and electrically conductive metal, such as aluminum or copper. The electrically insulating material base 83 may comprise a polymer or plastic, which may be known to a person skilled in the art. In the embodiment shown in Fig. 4, the metal sub-plates 90 include four peripheral metal sub-plates, namely, a metal sub-plate 90a, a metal sub-plate 90b, a metal sub-plate 90c and a metal sub-plate 90d, and two central metal sub-plates, namely, a metal sub-plate 90g and 90h. The metal sub-plates 90 are disposed apart from one another. In other words, the metal sub-plates 90 are disposed in the electrically insulating material base 83, such that a portion of the electrically insulating material base 83 lies between any two neighboring metal sub-plates 90. For the sake of understandability, the metal sub-plates 90 of Fig. 4 are not depicted in Fig. 3. The thickness of the interface plate 82 may lie within a range of 0.5 to 1.5 mm.

Furthermore, the interface unit 81 of BDU 80 comprises BDU elements. The BDU elements comprise a BDU control unit 86, two plurality of BDU relays, namely, a first BDU relay 87a and a second BDU relay 87b, two BDU fuses, namely, a first BDU fuse 88a and a second BDU fuse 88b, and a plurality of BDU busbars 89. The BDU control unit 86 is configured to control the BDU relays 87a and 87b, particularly to set a conductivity of the BDU relays 87a and 87b. The BDU control unit 86 is further configured to control the BDU fuses 88a and 88b, particularly to monitor a state of the BDU fuses 88a and 88b. Particularly, the BDU control unit 86 is configured to receive a signal indicative of a malfunction of the battery system 50 and/or indicating that disconnecting the at least one battery module 20 from a load is required and, in response to receiving such signal, is configured to control the further BDU elements, such as the BDU relays 87a and 87b and BDU fuses 88a and 88b, to disconnect the at least one battery module 20 from the respective system terminal (and consequently a downstream load). The functions of such components as part of a BDU are known to the skilled person. Furthermore, it is to be understood, that the presented BDU elements are not limited to the number of BDU relays and BDU fuses, as a person skilled in the art could use any other number of BDU relays and BDU fuses, for example, only one BDU fuse instead of two.

The BDU busbars 89 connect the module terminals 21, 22 of the battery module 20 of the battery system 50 with system terminals 51, 52, respectively, wherein these connections are provided via the BDU relays 87a and 87b and BDU fuses 88a and 88b, respectively. The control signals of the BDU control unit 86 with respect to the BDU relays 87a and 87b and BDU fuses 88a and 88b are indicated in Fig. 3 by lines with little circles disposed thereon.

The first module terminal 21 of the battery module 20 is connected to a first (positive) battery system terminal 51 of the battery system 50 via a first high current connector 30a, particularly via a first high current cable 30a, the BDU busbars 89 and the BDU elements 87a, 88a. The second module terminal 22 of the battery module 20 is connected to a second (negative) battery system terminal 52 of the battery system 50 via a second high current connector 30b, particularly via a second high current cable 30b, the BDU busbars 89 and the BDU elements 87b, 88b. A high current path is formed by the first high current connector 30a, the second high current connector 30b, the busbars 30c, and the BDU busbars 89.

In other words, the BDU 80 comprising the interface unit 81 is electrically connected to and selectively closing the electric path between the module terminals 21, 22 and the battery system terminals 51, 52. The BDU 80 comprises BDU elements that are configured for selectively disconnecting at least one of the first battery system terminal 51 and second battery system terminal 52 and the at least one battery module 20. In other words, the BDU elements are configured to commonly provide the actual function of the BDU 80. The housing 70 encloses the battery module 20 and the BDU 80.

According to the embodiment shown in Fig. 4, the BDU elements, that is the BDU control unit 86, the two plurality of BDU relays, namely, the first BDU relay 87a and the second BDU relay 87b, the two BDU fuses, namely, the first BDU fuse 88a and a second BDU fuse 88b are disposed on the respective metal sub-plates 90. For the sake of understandability, the first BDU relay 87a, the second BDU relay 87b, the first BDU fuse 88a and the second BDU fuse 88b are depicted in Fig.4 and are corresponding to the BDU elements depicted in Fig. 3. The metal sub-plates 90 function (i.e., form) the plurality of BDU busbars 89 upon which the BDU relays 87a, 87b and fuses 88a, 88b are disposed in order to selectively interconnect the metal sub-plates 90 to form the BDU busbars 89 interconnecting the module terminals 21, 22 and the system terminals 51, 52, the BDU relays 87a, 87b and fuses 88a, 88b may be disposed on the metal sub-plates 90 by means of laser welding, for example.

The first BDU relay 87a is disposed on a part of the metal sub-plate 90b and on a part of the metal sub-plate 90g, whereas the first high current connector 30a electrically connecting the first module terminal 21 to the first BDU relay 87a, as shown in Fig. 3, is connected detachably to the metal sub-plate 90b by means of a joining element 61, such as a screw-bolt joint. Similarly, the first BDU fuse 88a is disposed on a part of the metal sub-plate 90a and on a part of the metal sub-plate 90g, whereas the BDU busbar 89 electrically connecting the first battery system terminal 51 to the first BDU fuse 88a,as shown in Fig. 3, is connected detachably to the metal sub-plate 90a by means of a joining element 62, such as screw-bolt joint. The second BDU relay 87b is disposed on a part of the metal sub-plate 90c and on a part of the metal sub-plate 90h, whereas the second high current connector 30b electrically connecting the second module terminal 22 to the second BDU relay 87b, as shown in Fig. 3, is connected detachably to the metal sub-plate 90c by means of a joining element 63, such as a screw-bolt joint. Similarly, the second BDU fuse 88b is disposed on a part of the metal sub-plate 90d and on a part of the metal sub-plate 90h, whereas the BDU busbar 89 electrically connecting the second battery system terminal 52 to the second BDU fuse 88b, as shown in Fig. 3, is connected detachably to the metal sub-plate 90d by means of a joining element 64, such as screw-bolt joint.

As apparent from Figs. 3 and 4, the metal sub-plate 90g may function as a BDU busbar 89, which electrically connects the first BDU relay 87a and the first BDU fuse 88a, whereas the metal plate 90h may function as a BDU busbar 89, which electrically connects the second BDU relay 87b and the second BDU fuse 88b. It is also possible, to dispose additional BDU busbars 89 on the metal sub-plates 90g and 90h, in order to electrically connect the first BDU relay 87a and the first BDU fuse 88a, and the second BDU relay 87b and the second BDU fuse 88b, respectively. Furthermore, the remaining metal sub-plates 90a-d from BDU busbars 89 forming the connection with the high current connectors 30a, 30b providing the connection to the module terminals 20, 21 and the system terminals 51, 52.

Furthermore, the BDU control unit 86 and the corresponding wiring may be disposed on the interface plate 82 in a manner similar, to the other aforementioned BDU elements, e.g., by being surface mounted to or embedded in the interface plate 82. This is of advantage, because this enables for an efficient manufacture of the BDU 80, which also comprises a compact structure of the interface plate 82. Moreover, the electrical connections of the BDU 80 with the module terminals 21, 22 and/or the battery system terminals 51, 52, can be easily disconnected mechanically when required by opening the corresponding joining elements 61, 62, 63 and 64, which may be in the form of screw-bolt joints. This is of advantage, for example, when one of the BDU fuses 88a, 88b needs to be replaced, the BDU 80 may be then easily electrically disconnected by merely opening the corresponding joining elements 62 and 64 before, replacing the corresponding BDU fuse 88a, 88b.

The battery system 50 may further comprise a battery management system, BMS, 77 located inside the housing 70 of the battery system 50 as shown in Fig. 3. The BMS 77 is configured to monitor the whole battery system 50, e.g. by measuring system voltage, system current, local temperature at different places inside the housing 70, and the insulation resistance between live components and the housing 70. The BMS 77 may determine the presence of an abnormal condition in the battery system 50 and perform or control to perform at least one countermeasure associated with the determined abnormal condition, such as e.g. transmit a warning signal to the vehicle's driver. Particularly, the BMS 77 transmits a disconnect signal DS to the BDU control unit 86 that, in response to receiving the disconnect signal DS, controls the BDU elements 87, 88 to disconnect the system terminals 51, 52 from the module terminals 21, 22, respectively. Particularly, the BDU control unit 86 controls the conductivity state of the BDU relays 87 to be non-conductive, separating the current paths from the module terminals 21, 22 to the system terminals 51, 52. However, if one or more of the BDU relays 87 malfunctions, the BDU control unit 86 can detect, whether one of the BDU fuses 88 is blown in response to any eventual overcurrent of the battery module 20 and, if one or both of the BDU fuses 88 are blown, detect that the battery system 50 reached a safe state.

Further preferred, the battery system 50 may comprise a plurality of low current connectors (not shown in figures) constituting a data connection between the at least one battery module 20 and the BMS 77. In other words, the low current connectors form a low current path, e.g. a data connection. Particularly preferred, each battery module 20 comprises a cell supervision circuit, CSC, which is configured to measure the individual cell voltages and the temperatures of the modules and may further be configured to actively or passively balance the cells 10 of a battery module 20. Further preferred, the low current connectors provide a data connection between the CSCs and the BMS 77 via a daisy chain data connection that must not be a loop. Further preferred, the low current connectors, particularly other ones of the plurality of low current connectors, constitute another data connection between BMS 77 and BDU 80.

The housing 70 of the battery system 50 (see Fig. 5), that is the top cover 73 of the housing 70, further comprises an opening 55. The area of the interface plate 82 of the interface unit 81 is lower than that of the opening 55, so that the interface plate 82 is able to be passed through the opening 55 from outside the battery system 50 into the battery compartment 74.

During the operation of the battery system 50, current passes through the BDU 80, which electrically connects the module terminals 21, 22 to the battery system terminals 51, 52. As per requirements of the battery system 50 in an electric vehicle, a current is passed through the BDU relays 87a, 87b. The BDU relays 87 have an internal resistance, as result of which heat is generated. Hence, during the operation of the battery system 50, especially, the BDU relays 87a and 87b, release heat energy, as result of which the temperature of the battery system 50 gets increased. This would have an adverse effect on the performance of the battery system 50 as a whole. Hence, it is necessary to transfer the released heat by means of cooling. The cooling of the battery system 50 may be realized by active cooling, that is by regulating external fluid, such as water around the housing 50 or by passive cooling, in which the battery system 50 is cooled by means of heat transfer through a cooling surface, such as a cooling plate.

According to the present disclosure, the battery system 50 comprises a cooling plate 110 which is detachably mounted on an outside of the housing 70 and is configured for closing the opening 55 of the housing 70. The cooling plate 110 may be formed of a metal, such as aluminum or copper, so that cooling plate 110 is configured to dissipate heat generated within the battery system 50 to the surroundings. The surface area of the cooling plate 110 may be less than 20%, preferably less than 10%, more preferred less than 5% of a total surface of the housing 70 of the battery system 50.

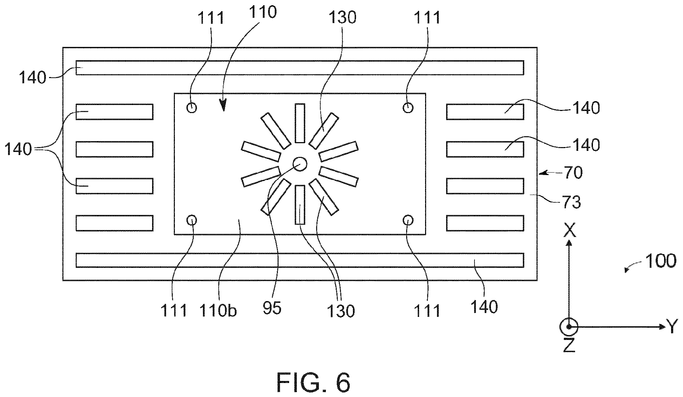

The cooling plate 110 may have a surface area which may be more than 5%, preferably more than 10%, more preferred more than 15% of the total surface area of the opening 55. As shown in Fig. 6, the shape of the cooling plate 110 may be in form of a rectangle, however, the shape of the cooling plate 110 is not limited to the aforementioned form, as person skilled in the art may adapt the shape of the cooling plate 110 as per his/her requirements. Further, the shape of the cooling plate 110 may be adapted to the shape of the opening 55.

Furthermore, the battery system 50 comprises a thermally conductive and electrically insulating thermal interface material layer 120, TIM, disposed between and adjacent to the interface unit 81 and the cooling plate 110. A thermally conductive and electrically insulating thermal interface material layer has a high thermal conductivity but low electrical conductivity, wherein this situation may occur when in insulators (low electrical conductivity), atomic vibrations (phonons) are very efficient at transporting heat. This is because heat is carried by both phonons and electrons, while free electrons are required for high electrical conductivity. Materials polymorphs of boron nitride and silicon carbide, aluminum nitride or aluminum nitride layer sandwiched between two copper layers may be used as TIM 120. However, other materials, which could be used as TIM 120, may be used by a person skilled in the art. A surface area of the TIM 120, may be similar to that of the interface plate 82 of the interface unit 81. A first side 82a of the interface plate 82 is facing a first side 120a of the TIM 120. A second side 82b of the interface plate 82 is facing the battery module 20. Furthermore, a second side 120b of the TIM 120 is facing a first side 110a of the cooling plate 110, whereas a second side 110b of the cooling plate 110 is facing to a surrounding of the housing 70 of the battery system 50.

The metal sub-plates 90 are exposed on the first side 82a as well as the second side 82b of the interface plate 82. In the illustrated embodiment, the metal sub-plates 90 are in direct contact with BDU relays 87a, 87b on the second side 82b of the interface plate 82 and face the interior of the battery compartment 74. The metal sub-plates 90 are electrically and thermally conducting, and hence metal sub-plates 90 provide a thermal contact between the BDU relays 87a, 87b, such that the BDU relays 87a, 87b upon the operation of the battery system 50, release heat energy and transfer the released heat energy to the metal sub-plates 90 by means of conduction. Furthermore, the heat released by the battery module 20 or other heat releasing components of the battery system 50 may be transferred to the metals sub-plates 90 and the housing 70 by means of radiation or conduction.

The metal sub-plates 90, which are also exposed on the first side 82a of the interface plate 82 and are in contact with the first side 120a of the TIM 120. Hence, the heat transferred to the metal sub-plates 90 from the BDU relays 87a, 87b on the second side 82b is transferred by the metal sub-plates 90 to the TIM 120 by means of conduction. Furthermore, the metal sub-plates 90 provide larger surface areas to which the heat is transferred from the other parts of any heat releasing elements of the battery system 50, which enhances heat transfer. Furthermore, the large surface areas of the metal sub-plates 90 which are in contact with the TIM 120 also enhances the heat transfer by means of conduction from the metal sub-plates 90 to the TIM 120. The heat transferred to the TIM 120 is further transferred to the cooling plate 110 by means of conduction. The transfer of heat energy from the battery system 50 to the cooling plate 110 via the metal sub-plates 90 and the TIM 120 is depicted by means of bold arrows 101 in Fig. 5.

The cooling plate 110 is in thermal contact with the housing 70, hence, the cooling plate transfers one part of the received heat energy from the battery system 50 to the housing 70 by means of conduction, as depicted by arrows 102 in Fig. 5. Furthermore, the other part of received heat energy by the cooling plate 110, is dissipated by the cooling plate 110 to the surroundings of the battery system 50, as depicted by means of arrows 103 in Fig. 5. The heat transferred by the cooling plate 110 may be by means of convection due to the air flow blowing over the second side 110b of the cooling plate 110 which is exposed to the outside surroundings of the battery system 50. Moreover, the rate of heat transfer due to convection is proportional to the relative velocity of the air flow outside the battery system 50, wherein the relative velocity of the air flow may be dependent on the speed of the electric vehicle.

The part of heat energy transferred from the cooling plate 110 to the housing 70, especially the top cover 73, is dissipated by the housing 70 to the surroundings of the battery system 50, as depicted by means of arrows 103 in Fig. 5. The mode of heat transfer by the housing 70 to the surroundings of the battery system 50 may be convection as well as radiation.

The cooling plate 110 is connected to the top cover 73 of the housing 70 by means of connecting elements 111, such as screw-bolt joints.

In addition to the relative velocity of the air flow, the surface area of exposure of the cooling plate 110 and/or the housing 70 is directly proportional to the rate of heat transfer. In order to enhance the rate of heat transfer, the cooling plate 110 comprises a plurality of primary ribs 130 configured for transferring heat from the battery system 50 to the surroundings outside the battery system 50, as shown in Fig. 6. The primary ribs 130 are in the form of protruding structures or fins to enhance the surface area of the cooling plate 110, in order to enhance the heat transfer from the battery system 50, especially from a hot spot 95 resulting from the heat released by the BDU 80, to the surroundings outside the battery system 50. The primary ribs 130 may comprise a radially symmetrical star shape, so as to enable a uniformly enhanced heat transfer from the hot spot 95 to the surroundings. The primary ribs 130 may be made of a thermally conductive material similar to that of the cooling plate 110 and may be disposed on the second side 110b of the cooling plate 110 by means of welding. However, the cooling plate 110 may also comprise the primary ribs 130 in a monolithic manner, as e.g., the cooling plate 110 comprising the primary ribs 130 may be manufactured by means of a mold.

Similarly, the housing 70, that is the top cover 73 of the housing 70, comprises secondary ribs 140 for transferring heat from the battery system 50 to the surroundings outside the battery system 50 as also shown in Fig. 6. The secondary ribs 140 may be made of a thermally conductive material similar to that of the top cover 73 of the housing 70 and may be disposed on the top cover 73 by means of welding. However, it is further thinkable that the top cover 73 comprising the secondary ribs 140 in a monolithic manner and may be manufactured by means of a mold. The structure and the distribution of the primary ribs 130 on the cooling plate 110 and that of the secondary ribs 140 on the top cover 73 of the housing 70 may be chosen by the person skilled in the art as per his/her requirements. In addition to the enhancement in the heat transfer capabilities of the cooling plate 110 and the housing 70, the respective primary ribs 130 and the secondary ribs 140 provide additional mechanical strength and structural stability to the cooling plate 110 and the housing 70, respectively.

In other words, as a whole, in order to allow fast charge conditions with currents beyond 350A (150kW) for longer period of time, the conducting components inside the BDU 80, particularly the BDU relays 87a, 87b and the BDU fuses 88a, 88b but also the BDU control unit 86 and the BDU busbars 89 have to be cooled to meet the temperature requirements of the components. Moreover, the housing 70 of the battery system 50, e.g., an EV battery system, is made of metal, with a good thermal conduction and a large surface to provide enough cooling for the BDU elements 86 - 89. Hence, the interface unit 81 is designed to have the biggest available area to thermally contact through the TIM 120 onto the cooling plate 110 made of metal which is attached to the battery housing 70 of the battery system as a service lid.

The battery system 50 further comprises a high-voltage connector 40, HVC, which is configured to reach through the opening 55 and to be electrically connected to the battery module terminals 21, 22 and to form the battery system terminals 51 and 52, as depicted by dashed lines 46 in Fig. 5. The HVC 40 is extending from the second side 110b of the cooling plate 110, which is exposed to the outside of the battery system 50. The HVC is extending from one side, that is the second side 110b, of the cooling plate 110 and the BDU 80 is mounted on the opposite side, that is the first side 110a, of the cooling plate 110 facing into the housing 70. The HVC 40 may be electrically connected by means of wirings running through respective wiring-openings (not shown in figures) in the cooling plate 110. The wirings from the HVC 40 may run through the respective wiring-openings in the cooling plate 110 as well as through the wiring-openings in the TIM 120. Furthermore, the HVC 40 itself may extend through respective openings in the cooling plate 110 as well as through respective openings in the TIM 120.

The HVC 40, the cooling plate 110, the TIM 120 and the BDU 80 are joined together, such that the cooling plate 110, the TIM 120, and the BDU 80 are configured as a single BDU assembly unit 115. In the embodiment shown in Fig. 5, the cooling plate 110, the TIM 120, and the interface unit 81 of BDU 80 are connected by means of joining elements 112, such as screw-bolt joints, whereas the HVC 40 are connected to the cooling plate 110 by means of joining elements (not shown in figures), for example screw-bolt joints. This is of advantage, because this provides a modular structure to the BDU assembly unit 115, which enables an efficient use and transport of the single BDU assembly unit 115.

Furthermore, the BDU assembly unit 115 is adapted to be removed from the outside of the housing 70. In other words, the BDU assembly unit 115 can be removed by merely opening the connecting elements 111, that is the screw-bolt joints. This is of advantage because this enable an efficient replacement of the BDU assembly unit 115 by merely removing the BDU assembly unit 115 from outside, without removing the housing 70 of battery system 50.

The housing 70 illustrated in Fig. 5 further comprises at least one additional opening 65 which allows opening an electric connection between the BDU 80 and the module terminals 21, 22 and/or the BDU 80 and the battery system terminals 51, 52, while the cooling plate 110 is mounted on the housing 70. This is of advantage, because it enables to disconnect the electrical connections prior to the removal of the cooling plate 110 which is essential for the safety of a user. The electrical connection may be opened by simply opening the joining elements 61, 62, 63 and 64, which may be screw-bolt joints, easily by reaching through the additional opening 65. For example in order to open the electrical connection between the BDU 80 and the first module terminal 21, the joining element 61 can be opened, for example by means of a screw-driver to open the corresponding screw-bolt joint. Similarly, in order to open the electrical connection between the BDU 80 and the second module terminal 22, the joining element 63 can be opened. Similarly, in order to open the electrical connection between the BDU 80 and the first battery system terminal 51, the joining element 62 can be opened, whereas, in order to open the electrical connection between the BDU 80 and the second battery system terminal 52, the joining element 64 can be opened.

The invention further discloses a vehicle (not shown in figures) including at least one battery system 50. The vehicle may be adapted such that the BDU assembly unit 115 is removable from the battery system 50 without removing the battery system 50 from the vehicle.

## Claims

1. Battery system (50), comprising:
a battery module (20) with a plurality of battery cells (10) interconnected between module terminals (21, 22);
a battery disconnecting unit, BDU (80), comprising an interface unit (81) electrically connected to and selectively closing an electric path between the module terminals (21, 22) and battery system terminals (51, 52);
a housing (70) enclosing the battery module (20) and the BDU (80) and comprising an opening (55);
a cooling plate (110) detachably mounted on an outside of the housing (70) and configured for closing the opening (55) of the housing (70); and
a thermally conductive and electrically insulating thermal interface material layer, TIM (120), disposed between and adjacent to the interface unit (81) and the cooling plate (110),
wherein the interface unit (81) comprises an interface plate with a plurality of metal sub-plates (90) in an electrically insulating material base (83) and BDU elements.

2. Battery system (50) according to claim 1, wherein a surface area of the cooling plate (110) is less than 20% of a total surface area of the housing (70).

3. Battery system (50) according to claims 1 or 2, wherein the cooling plate (110) is configured to be in a thermal contact with the housing (70), wherein the cooling plate (110) and/or the housing (70) is/are configured to transfer heat to surroundings outside the battery system (50).

4. Battery system (50) according to any of the preceding claims, wherein the cooling plate (110) comprises a plurality of primary ribs (130) configured for transferring heat from the battery system (50) to surroundings outside the battery system (50).

5. Battery system (50) according to any of the preceding claims, wherein the housing (70) comprises a plurality of secondary ribs (140) configured for transferring heat from the battery system (50) to surroundings outside the battery system (50).

6. Battery system (50) according to claims 1 to 5, wherein the metal sub-plates (90) are disposed apart from one another and selectively connected to or by the BDU elements.

7. Battery system (50) according to claims 1 to 6, wherein the BDU elements comprise a BDU control unit (86) and at least one BDU relay (87a, 87b), at least one BDU fuse (88a, 88b) and/or at least one BDU busbar (89).

8. Battery system (50) according to any of the claims, wherein a high-voltage connector, HVC (40), is configured to reach through the opening (55) and to be electrically connected to the interface unit (81) and forming the battery system terminals (51, 52).

9. Battery system (50) according to claim 8, wherein the HVC (40) is extending from one side (110b) of the cooling plate (110) and the BDU (80) is mounted on the opposite side (110a) of the cooling plate (110) facing into the housing (70).

10. Battery system (50) according to claims 8 or 9, wherein the HVC (40), the cooling plate (110), the TIM (120) and the BDU (80) are joined together to form a single BDU assembly unit.

11. Battery system (50) according to any of the claims 8 to 10, wherein the HVC (40) extends through the cooling plate (110) and the TIM (120).

12. Battery system (50) according to claim 11, wherein the BDU assembly unit (115) is adapted to be removed from the outside of the housing (70).

13. Battery system (50) according to any of the preceding claims, wherein the housing (70) comprises at least one additional opening (65) which allows opening an electric connection between the BDU (80) and the module terminals (21, 22) and/or the BDU (80) and the battery system terminals (51, 52), while the cooling plate (110) is mounted on the housing (70).

14. A vehicle including a battery system (50) according to any one of the preceding claims.

## Patentansprüche

1. Batteriesystem (50), umfassend:
ein Batteriemodul (20) mit einer Vielzahl von Batteriezellen (10), die zwischen Modulanschlüssen (21, 22) miteinander verbunden sind;
eine Batterietrenneinheit, BDU (80), die eine Schnittstelleneinheit (81) umfasst, die elektrisch mit einem elektrischen Pfad zwischen den Modulanschlüssen (21, 22) und Batteriesystemanschlüssen (51, 52) verbunden ist und diesen selektiv schließt;
ein Gehäuse (70), das das Batteriemodul (20) und die BDU (80) umschließt und eine Öffnung (55) aufweist;
eine Kühlplatte (110), die abnehmbar an einer Außenseite des Gehäuses (70) angebracht und zum Verschließen der Öffnung (55) des Gehäuses (70) konfiguriert ist; und
eine wärmeleitende und elektrisch isolierende Wärmeschnittstellenmaterialschicht, TIM (120), die zwischen und neben der Schnittstelleneinheit (81) und der Kühlplatte (110) angeordnet ist,
wobei die Schnittstelleneinheit (81) eine Schnittstellenplatte mit einer Vielzahl von Metallteilplatten (90) in einer elektrisch isolierenden Materialbasis (83) und BDU-Elementen umfasst.

2. Batteriesystem (50) nach Anspruch 1, wobei eine Oberfläche der Kühlplatte (110) weniger als 20% einer Gesamtoberfläche des Gehäuses (70) beträgt.

3. Batteriesystem (50) nach Anspruch 1 oder 2, wobei die Kühlplatte (110) so konfiguriert ist, dass sie in einem thermischen Kontakt mit dem Gehäuse (70) steht, wobei die Kühlplatte (110) und/oder das Gehäuse (70) so konfiguriert ist/sind, dass sie Wärme an die Umgebung außerhalb des Batteriesystems (50) abgeben.

4. Batteriesystem (50) nach einem der vorhergehenden Ansprüche, wobei die Kühlplatte (110) eine Vielzahl von primären Rippen (130) umfasst, die zur Übertragung von Wärme vom Batteriesystem (50) an die Umgebung außerhalb des Batteriesystems (50) konfiguriert sind.

5. Batteriesystem (50) nach einem der vorhergehenden Ansprüche, wobei das Gehäuse (70) eine Vielzahl von Sekundärrippen (140) aufweist, die zur Übertragung von Wärme vom Batteriesystem (50) an die Umgebung außerhalb des Batteriesystems (50) konfiguriert sind.

6. Batteriesystem (50) nach einem der Ansprüche 1 bis 5, wobei die Metallteilplatten (90) voneinander beabstandet angeordnet und selektiv mit den oder durch die BDU-Elemente/n verbunden sind.

7. Batteriesystem (50) nach einem der Ansprüche 1 bis 6, wobei die BDU-Elemente eine BDU-Steuereinheit (86) und mindestens ein BDU-Relais (87a, 87b), mindestens eine BDU-Sicherung (88a, 88b) und/oder mindestens eine BDU-Sammelschiene (89) umfassen.

8. Batteriesystem (50) nach einem der Ansprüche, wobei ein Hochspannungsverbinder, HVC (40), so konfiguriert ist, dass er durch die Öffnung (55) hindurchreicht und elektrisch mit der Schnittstelleneinheit (81) verbunden ist und die Batteriesystemanschlüsse (51, 52) bildet.

9. Batteriesystem (50) nach Anspruch 8, wobei sich der HVC (40) von einer Seite (110b) der Kühlplatte (110) aus erstreckt und die BDU (80) auf der gegenüberliegenden, in das Gehäuse (70) weisenden Seite (110a) der Kühlplatte (110) montiert ist.

10. Batteriesystem (50) nach Anspruch 8 oder 9, wobei der HVC (40), die Kühlplatte (110), die TIM (120) und die BDU (80) miteinander verbunden sind, um eine einzige BDU-Anordnungseinheit zu bilden.

11. Batteriesystem (50) nach einem der Ansprüche 8 bis 10, wobei sich der HVC (40) durch die Kühlplatte (110) und die TIM (120) erstreckt.

12. Batteriesystem (50) nach Anspruch 11, wobei die BDU-Anordnungseinheit (115) so angepasst ist, dass sie von der Außenseite des Gehäuses (70) entfernt werden kann.

13. Batteriesystem (50) nach einem der vorhergehenden Ansprüche, wobei das Gehäuse (70) mindestens eine zusätzliche Öffnung (65) aufweist, die das Öffnen einer elektrischen Verbindung zwischen der BDU (80) und den Modulanschlüssen (21, 22) und/oder der BDU (80) und den Batteriesystemanschlüssen (51, 52) ermöglicht, während die Kühlplatte (110) am Gehäuse (70) montiert ist.

14. Fahrzeug, umfassend ein Batteriesystem (50) nach einem der vorhergehenden Ansprüche.

## Revendications

1. Système de batterie (50) comprenant :
un module de batterie (20) avec une pluralité de cellules de batterie (10) interconnectées entre des bornes de module (21, 22) ;
une unité de déconnexion de batterie, BDU (80), comprenant une unité d'interface (81) connectée électriquement à un trajet électrique entre les bornes de module (21, 22) et les bornes de système de batterie (51, 52) et fermant celui-ci de manière sélective ;
un boîtier (70) renfermant le module de batterie (20) et la BDU (80) et comprenant une ouverture (55) ;
une plaque de refroidissement (110) montée amovible sur un extérieur du boîtier (70) et configurée pour fermer l'ouverture (55) du boîtier (70) ; et
une couche de matériau d'interface thermique thermoconductrice et électriquement isolante, TIM (120), disposée entre l'unité d'interface (81) et la plaque de refroidissement (110) et adjacente à celles-ci,
dans lequel l'unité d'interface (81) comprend une plaque d'interface avec une pluralité de sous-plaques de métal (90) dans une base de matériau électriquement isolante (83) et des éléments BDU.

2. Système de batterie (50) selon la revendication 1, dans lequel une surface de la plaque de refroidissement (110) est inférieure à 20 % d'une surface totale du boîtier (70).

3. Système de batterie (50) selon les revendications 1 ou 2, dans lequel la plaque de refroidissement (110) est configurée pour être en contact thermique avec le boîtier (70), dans lequel la plaque de refroidissement (110) et/ou le boîtier (70) est/sont configuré(s) pour transférer de la chaleur vers l'environnement à l'extérieur du système de batterie (50).

4. Système de batterie (50) selon l'une quelconque des revendications précédentes, dans lequel la plaque de refroidissement (110) comprend une pluralité de nervures primaires (130) configurées pour transférer de la chaleur en provenance du système de batterie (50) vers l'environnement à l'extérieur du système de batterie (50).

5. Système de batterie (50) selon l'une quelconque des revendications précédentes, dans lequel le boîtier (70) comprend une pluralité de nervures secondaires (140) configurées pour transférer de la chaleur en provenance du système de batterie (50) vers l'environnement à l'extérieur du système de batterie (50).

6. Système de batterie (50) selon les revendications 1 à 5, dans lequel les sous-plaques de métal (90) sont disposées à l'écart l'une de l'autre et connectées de manière sélective aux éléments BDU ou par ceux-ci.

7. Système de batterie (50) selon les revendications 1 à 6, dans lequel les éléments BDU comprennent une unité de commande BDU (86) et au moins un relais BDU (87a, 87b), au moins un fusible BDU (88a, 88b) et/ou au moins une barre omnibus BDU (89).

8. Système de batterie (50) selon l'une quelconque des revendications, dans lequel un connecteur haute tension, HVC (40), est configuré pour passer à travers l'ouverture (55) et pour être connecté électriquement à l'unité d'interface (81) et formant les bornes de système de batterie (51, 52).

9. Système de batterie (50) selon la revendication 8, dans lequel le HVC (40) s'étend à partir d'un côté (110b) de la plaque de refroidissement (110) et la BDU (80) est montée sur le côté opposé (110a) de la plaque de refroidissement (110) faisant face au boîtier (70).

10. Système de batterie (50) selon les revendications 8 ou 9, dans lequel le HVC (40), la plaque de refroidissement (110), la TIM (120) et la BDU (80) sont assemblés pour former une unité d'assemblage BDU unique.

11. Système de batterie (50) selon l'une quelconque des revendications 8 à 10, dans lequel le HVC (40) s'étend à travers la plaque de refroidissement (110) et la TIM (120) .

12. Système de batterie (50) selon la revendication 11, dans lequel l'unité d'assemblage BDU (115) est adaptée pour être retirée depuis l'extérieur du boîtier (70).

13. Système de batterie (50) selon l'une quelconque des revendications précédentes, dans lequel le boîtier (70) comprend au moins une ouverture supplémentaire (65) qui permet l'ouverture d'une connexion électrique entre la BDU (80) et les bornes de module (21, 22) et/ou la BDU (80) et les bornes de système de batterie (51, 52), tandis que la plaque de refroidissement (110) est montée sur le boîtier (70).

14. Véhicule comportant un système de batterie (50) selon l'une quelconque des revendications précédentes.
